(19) **Europäisches Patentamt / European Patent Office / Office européen des brevets**

(11) **EP 1 729 455 B1**

(12) **EUROPEAN PATENT SPECIFICATION**

(45) Date of publication and mention
of the grant of the patent:
**22.04.2009 Bulletin 2009/17**

(51) Int Cl.:
*H04L 12/56* (2006.01)   *G06F 3/033* (2006.01)
*G06F 3/023* (2006.01)

(21) Application number: **05011860.3**

(22) Date of filing: **01.06.2005**

(54) **Wireless communication system and method for identifying communication between multiple transmitters and a single receiver**

Funkkommunikationssystem und Verfahren zum Identifizieren der Kommunikation zwischen mehreren Sendern und einem einzigen Empfänger

Système de communication sans fil et procédé pour identifier la communication entre plusieurs émetteurs et un seul récepteur

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**06.12.2006 Bulletin 2006/49**

(73) Proprietor: **TOPSEED TECHNOLOGY CORP.**
**Chung Ho City**
**Taipei Hsien**
**Taiwan (TW)**

(72) Inventor: **Chi, Chung-Ping**
**Chung Ho City,**
**Taipei Hsien,Taiwan 235**
**R.O.C. (TW)**

(74) Representative: **TER MEER - STEINMEISTER & PARTNER GbR**
**Patentanwälte**
**Mauerkircherstrasse 45**
**81679 München (DE)**

(56) References cited:
**EP-A- 0 921 657**      **US-A- 4 313 227**
**US-A- 4 924 216**      **US-A- 5 331 450**
**US-A- 5 663 716**

## Description

Field of the Invention

The present invention relates to a wireless communication system for computer peripheral, especially to a wireless communication system for identifying communication between multiple transmitters and single receiver.

Description of Related Art

Computers become omnipresent for modem society and the machine-man interfaces such as digital tablet, joystick, game pad, remote controller and 3D pointing device are often used besides keyboard and mouse. Those input devices are connected to I/O ports of a host compute through connection wires. However, the I/O ports are generally with limited number and resource for computer; and the connection wires will get the operation environment into mess.

The wireless input devices for computers become more and more popular, however, still much room leaves for improvement. The current commercially available integrated type wireless input devices, for example a wireless mouse integrated with a wireless keyboard can share one receiver. For example, US pat no. 5,854,621, disclosed a wireless interface with a single-way communication between the transmitters and the receiver. The communication between multiple transmitters and single receiver can be achieved by using simple ID code. However, the number of accessible transmitters is still limited. As stated in Col. 2, lines 51 to 52 of the '621 patent, there are only two transmitters available when sharing one receiver.

For the application requiring more input devices, a complicated skill is involved. US Pat. No. 5,881,366 discloses communication for multiple input devices sharing one receiver, wherein two-way communication and complicated ID code are used. However, this solution is of high cost and the communication is interfered when a plurality wireless devices share the same communication channel in a computer. The interference becomes more serous when more wireless devices are involved in the communication system. However, this issue is not addressed by the above-mentioned two prior arts. The channel selection proposed in the above-mentioned two prior arts uses approach similar to that in analog cordless phone, which is intended to solve the interference of off-system devices using the same communication channel. This approach cannot solve the interference of intra-system devices using the same communication channel.

Moreover, in many applications, such as office, Internet café and library, the computers are arranged within short distance, for example, within 1 meter. The effective distance for radio frequency (RF) communication is more than 1.5 meter. One computer may have the risk to receive a wireless signal sent from the wireless transmitter of an adjacent computer. Therefore, the interference of intra-system devices and off-system devices should be simultaneously addressed and are not solved by current wireless input devices of computers.

U.S. Patent US-A-4313227 discloses a light energy transmission system wherein transmitters repeatedly transmit data pulses and wherein a receiver tunes to each transmitter according to a predetermined sequence.

## SUMMARY OF THE INVENTION

The present invention provides a wireless communication system for computer peripheral and method for the same, wherein a plurality of wireless input devices of the computer can share on receiver by identifying the input signal sent from the wireless input devices. The computer can be a personal computer, a workstation, a personal digital assistant and a game console. Moreover, the input device can be a mouse, a keyboard, a joystick, a digital board, a touchpad and a gamepad. The computer can be equipped with input devices with categories different from each other, for example, each one of above-mentioned input devices. Moreover, the computer can be equipped with input devices with the same categories such as two mice and three keyboards.

Accordingly, the present invention provides a low-power and one-way communication wireless communication system for computer peripheral and method for the same. The computer comprises a receiver and the input devices are allocated with specific communication channels according to the specific categories thereof. For example, all mice use a first communication channel, and all keyboards use a second communication channel. Each input signal sent from the input device is prefixed with an ID code composed of a category field and a serial field. The input signal is repeatedly sent in a plurality of cycle within a first time slot. The receiver receives the input signal from one channel within a second time slot shorter than the first time slot. Therefore, the receiver can sequentially receive the input signals of multiple wireless input devices in consecutive cycles. The receiver also can identify a specific input device by the ID code thereof and properly process the input signal.

In one aspect of the present invention, a plurality of wireless input devices is used for a computer and share one receiver.

In another aspect of the present invention, a wireless communication system and method are provided to simultaneously use wireless input devices of different channels.

In still another aspect of the present invention, a wireless communication system and method are provided to use RF signal and one-way communication.

## BRIEF DESCRIPTION OF DRAWING:

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:

Fig. 1 shows an application of the present invention.
Fig. 2 shows timing diagram of input signal and receiving period of the receiver.
Fig. 3 shows the channel allocation according to a preferred embodiment of the present invention.
Fig. 4 shows the channel switching sequence for the input devices.
Fig. 5 shows the format of ID code and input signal.
Fig. 6 shows the flowchart of the method according to the present invention.
Fig. 7 shows the block diagram of the input device according to the present invention.
Fig. 8 shows the block diagram of the receiver according to the present invention.

## DETAILED DESCRIPTION OF THE INVENTION

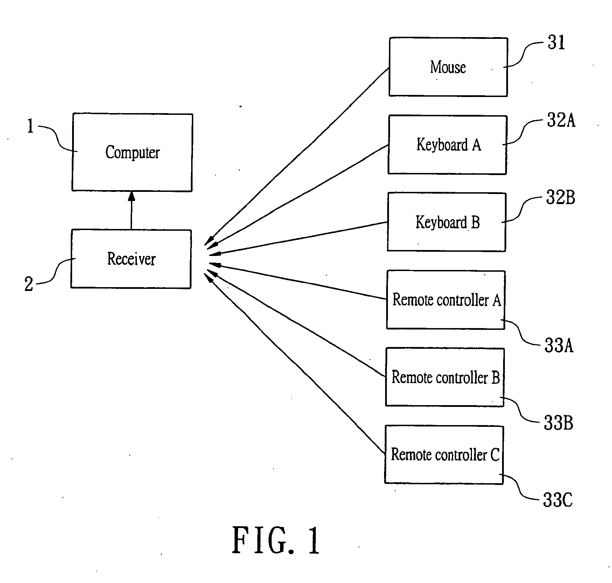

Fig. 1 shows an application of the present invention, wherein a plurality of wireless input devices 31-33 are connected to a computer 1 through wireless medium. Each of the wireless input devices 31-33 comprises a wireless RF transmitter and the computer 1 comprises a receiver 2 corresponding to the wireless input devices 31-33. The wireless input devices 31-33 can be any of computer input devices and the combination thereof. As shown in Fig. 1, there are a mouse 31, two keyboards 32A, 32B and three remote controllers 33A, 33B, 33C connected to the computer 1, namely, six input devices of three categories connected to the computer 1.

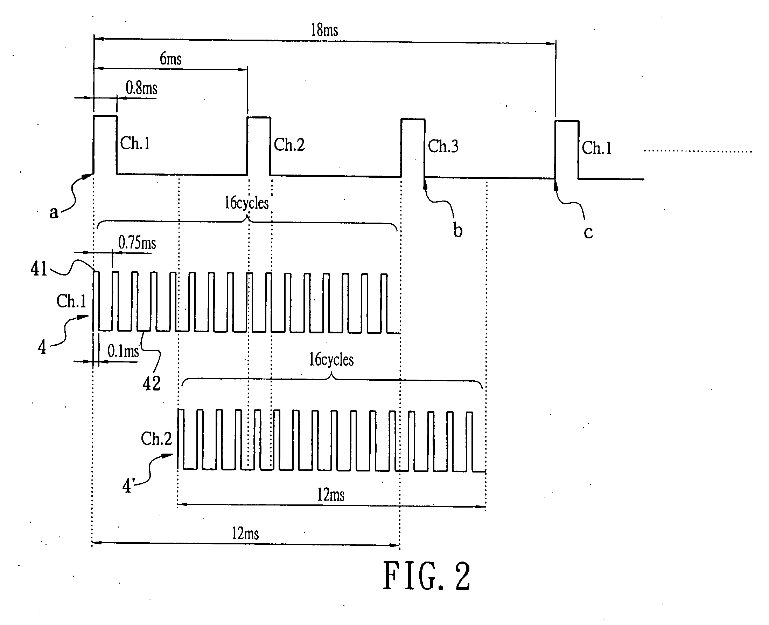

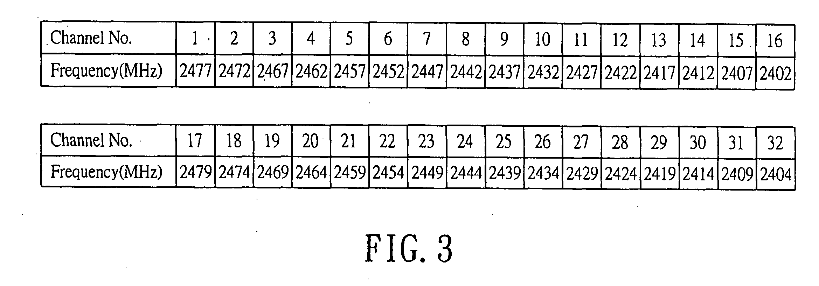

With reference to Fig. 2, the transmitter of the wireless input devices 31-33 emits input signal 4 to the receiver 2 and the input signal 4 is modulated at Frequency Shift Keying (FSK) scheme. Provided that the carrier frequency is 2.4GHz and the frequency separation is 5MHz, tens or hundreds of communication channels can be defined. Fig. 3 shows a channel allocation according to a preferred embodiment of the present invention, wherein 32 communication channels are allocated in this table and the actual number of tables is up to design choice. According to a preferred embodiment of the present invention, the input devices 31-33 of the same category are assigned with the same communication channel. For example, the mouse 31 uses the first communication channel, the keyboards 32A and 32B use the second communication channel while the remote controllers 33A, 33B, and 33C use the third communication channel. Alternatively, each one of the wireless input devices 31-33 uses one particular communication channel, irrespective to the category thereof. This arrangement is practical when the amount of the input devices 31-33 is not large, even though this arrangement will use more resource.

When one of the input devices 31-33 is operated, the input signal 4 generated therefrom is composed of periodic signal of many cycles in a predetermined first time slot. As shown in Fig. 2, the first time slot is 12 ms, namely, each operation of the input devices 31-33 will generate input signal 4 of 16 consecutive cycles in the first time slot of 12 ms duration. Each cycle of the input signal 4 has a duration of 0.75 ms. For each duration, there is a signal period 41 of 0.1 ms and a blank period 42 of 0.65 ms. Each of the input devices 31-33 will send its own input signal 4 at different time point and through different communication channel. For example, the mouse 31 will send a first input signal 4 at a first time point in the first communication channel; and the keyboard 32A will send a second input signal 4' at a second time point in the second communication channel.

The receiver 2 will receive the transmitted signal through a channel-jumping scheme in a second time slot shorter than the first time slot. The first time slot and the second time slot preferably obey following relationship:

$$T_2 = T_1/(n-1)$$

where $T_2$ is the second time slot and $T_1$ is the first time slot, n is input category number for the input devices 31-33 and $n \geqq 2$. The present invention is designed for multiple input devices; therefore n should be at least two. When n is equal to two, the first time slot is equal to the second time slot. For the situation shown in Fig. 1 with three categories of input devices 31-33, the second time slot is one half of the first time slot, namely, $T_2$ is 6 ms when $T_1$ is 12 ms. The receiver 2 will be operated based on the second time slot and receives the signal from the input devices in predetermined channel-jumping scheme. According to a preferred embodiment of the present invention, the receiver 2 receives the signal of the first communication channel in a first cycle, receives the signal of the second communication channel in a second cycle, receives the signal of the third communication channel in a third cycle, and receives the signal of the first communication channel in a fourth cycle. According to a preferred embodiment of the present invention, the receiver 2 is also operated at pulse mode with 0.8 ms operation period per cycle and the remaining time is idle period to save power. The duty cycle is about 15% to save power consumption.

According to above formula, the duration of each input signal 4, 4' is similar to a receiving duration of the receiver 2 necessary for receiving all input signals, wherein the receiving duration is the sum of several operation periods and idle periods. In the example shown in Fig. 2 with three input device categories, the receiving duration is the time for receiving signal trough the firs communication channel to the third communication channel. Therefore, the receiving duration is equal to the sum of three operation periods and two idle periods (from time point a to time point b) and roughly equal to the first time slot. Moreover, each cycle in the first time slot elapses 0.75 ms, which is shorter than the operation period of 0.8 ms for the receiver 2. At least one cycle in the first time slot for one input device will be received within the operation period of the receiver 2. Therefore, the input signal will not be missed.

Moreover, according to the experiment of inventor, user will not sense the delay or discontinuity of operation if the signal reception frequency of one input device (31-33) is more than 17 times per second. In other word, the signal reception period for one communication channel should be less than 59 ms. The preferred embodiment shown in Fig. 2 has reception cycle time of 6 ms for different communication channel and the total channel communication number is 3. Therefore, the signal reception period for one communication channel is 18 ms, which is far below the threshold of 59 ms. Therefore, the supported input device category is 9,which is sufficient for user need.

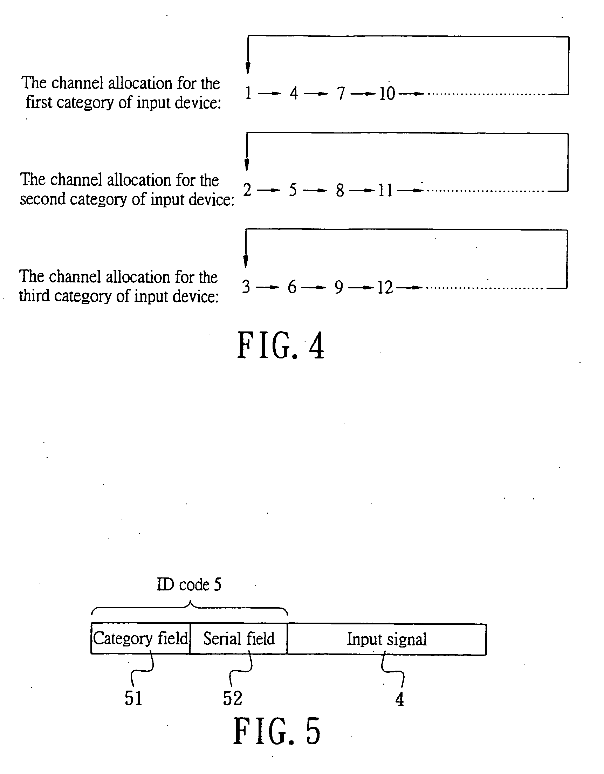

Moreover, to solve the problem of interference between the input devices 31-33 with the same communication channel, a channel switching scheme is also provided in the present invention. Each of the input devices 31-33 selects a plurality of accessible communication channels from Fig. 3 and the plurality of accessible communication channels are arranged in a predetermined sequence. The input devices of the same category will use the same sequence. Fig. 4 shows a preferred embodiment for the channel sequence. The input device of the first category first uses the first communication channel and then uses the fourth communication channel after the frequency switch is pressed. The input device of the first type will then use the seventh communication channel after the frequency switch is pressed again. The input device of the second category first uses the second communication channel and then uses the fifth communication channel after the frequency switch is pressed. The input device of the second category will then use the eighth communication channel after the frequency switch is pressed again. It should be noted the sequence in Fig. 4 is not mandatory, other sequence can be used as long as one communication channel is not repeatedly used. In the preferred embodiment shown in Fig. 2, the receiver 2 first receives signal from the input devices 31-33 of the first category, the second category and the third category through the first, the second and the third communication channel, respectively. When the input device 31 of the first category is switched to use the fourth communication channel, the receiver 2 first receives signal from the input devices 31-33 of the first, the second and the third categories through the fourth, the second and the third communication channel, respectively.

With reference to Fig. 5, the input signal 4 sent from the input devices 31-33 will be prefixed by an ID code 5 associated with the input device. Therefore, the receiver 2 can identify the input signal to belong to one of the input devices 31-33 by checking the ID code 5. The ID code 5 comprises a category field 51 and a serial field 52, wherein the category field 51 is unchangeable and dependent on the category of the input devices 31-33. If the category field 51 is coded by two binary bits, four categories can be designated. If the category field 51 is coded by three binary bits, eight categories can be designated. More particularly, taking three binary bits as example, 000 indicates the first category, 001 the second category and 010 the third category. Moreover, other coding can be used. The category field 51 can be omitted when the input devices 31-33 uses different communication channels.

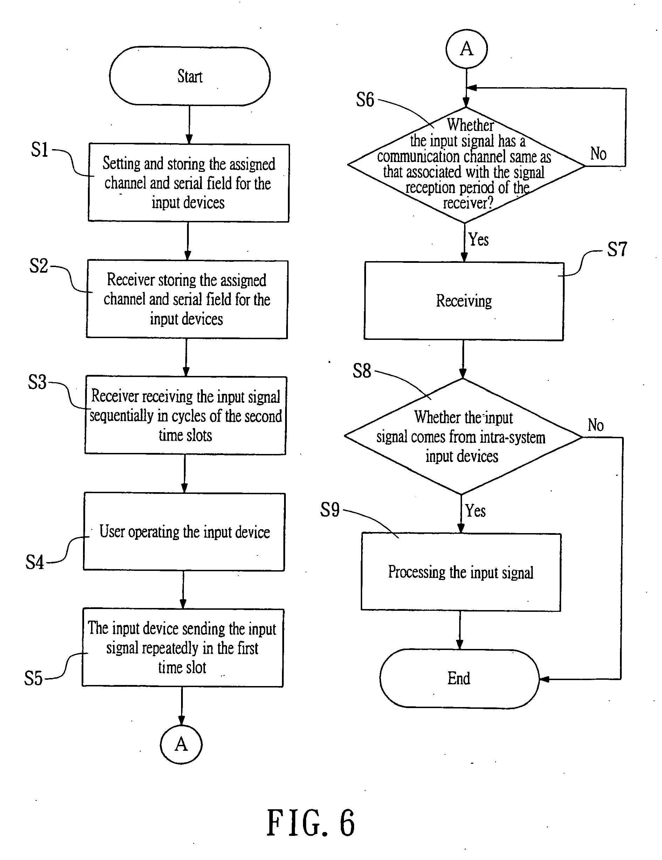

The serial field 52 in the ID code 5 indicates the serial number of the multiple input devices of the same category. The serial field 52 can be used alone and fulfill the function of the ID code when the category field 51 is not used. The serial field 52 is changeable and can be changed by a serial field switch 345 shown in Fig. 6. The serial field 52 can be coded by two or three binary bits to support four or eight input devices 31-33 of the same category. For example, the serial field 52 can be coded into 00, 01, 10 and 11 when two binary bits are used to discriminate the devices within the same category. Taking the two mice 32A and 32B of the second category as example, the ID codes 5 of the mice 32A and 32B can be 001-00 and 001-01. For the three remote controllers 33A, 33B and 33C, the ID codes 5 can be 010-00, 010-01 and 010-10. Therefore, each of the input devices 31-33 has unique ID code 5 and the receiver 2 can identify a particular one of the input devices 31-33 by an ID code. When only one input device is allowed for one input device category, the ID code is not mandatory and the channel information can be used to identify the input signal 4.

Fig. 6 shows the flowchart of the method according to the present invention. In firs step S1, the communication channel and serial field 51 are set for the input devices 31-33. The step is necessary only for first time installing the input devices 31-33 or when the input devices 31-33 is updated or replaced. The step is not necessary for every time. The communication channel and serial field 51 are stored to the input devices 31-33 and the receiver 2. Therefore, the receiver 2 can also update the communication channel and serial code 51 simultaneously at step S2. The receiver 2 than receives the input devices 31-33 one by one in cycles of the second time slot at step S3. When a user operates one of the input devices 31-33 at the step S4, the input devices 31-33 will continuously transmits a plurality of periodical signal 4 in the predetermined first time slot at step S5. The receiver 2 is operated in frequency jumping scheme and the firs time slot has specific relationship with the second time slot. Therefore, one input signal 4 must have at least one overlap with the operation period in the signal reception period of the receiver 2. The communication channel of the input signal is discriminated at step S6 and the input signal with a communication channel different to that associated with the signal reception period of the receiver 2 cannot be received. The input signal is received at step S7 when the input signal has a communication channel same as that associated with the signal reception period of the receiver 2. The received input signal is identified at step S8 to check if the input signal comes from intrasystem input devices. If the input signal is not from intrasystem input devices, the input signal 4 is not processed. Otherwise, the input signal 4 is processed to finish the input operation for the input devices 31-33.

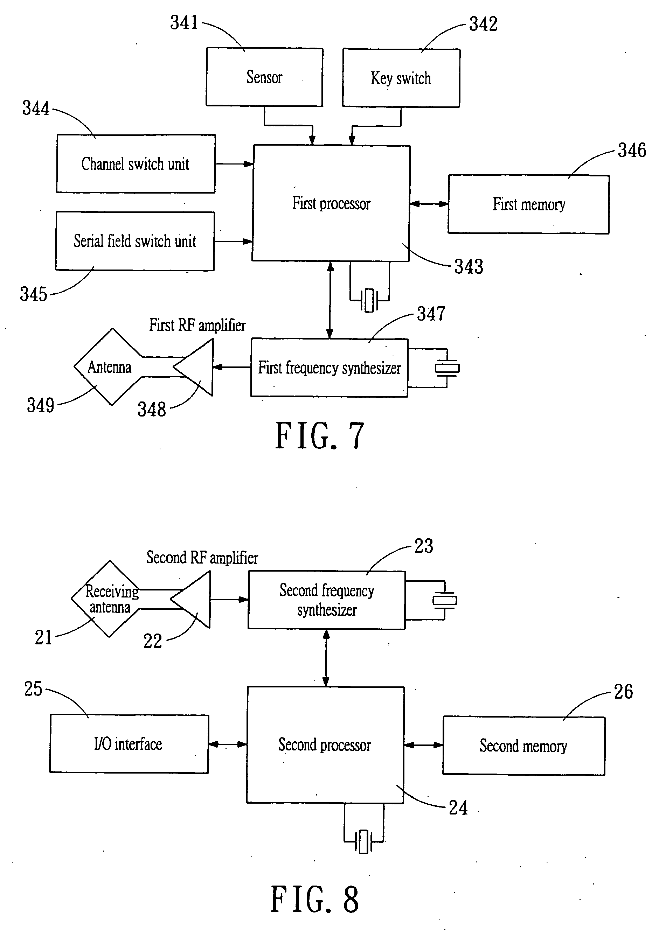

Fig. 7 and 8 show block diagram for implementing the communication method according to the present invention. Fig. 7 shows the block diagram for implementing the input devices 31-33, which comprises a first processor 343 as controller for other component. The input device further comprises a key switch 342 for inputting user instruction, a sensor 341 for sensing operation of user such as those arranged on mouse and digital pad. The first processor 343 converts the signal from the key switch 342 and/or the sensor 341 into an input signal 4 in computer-recognizable form. The input device 31-33 further comprises a non-volatile first memory 346 for storing the assigned communication channel and ID code 5 for the input devices 31-33. The first processor 343 will encode the input signal 4 based on the information stored in the first memory 346. A first frequency synthesizer 347, under the control of the first processor 343, modulates the input signal 4 into periodic form shown in Fig. 2 for corresponding communication channel. The input device 31-33 further comprises a first RF amplifier 348 and an antenna 349 to transmit the modulated signal. A channel switch unit 344 and a serial field switch unit 345 are electrically connected to the first processor 343. Through the channel switch unit 344 and the serial field switch unit 345, user can change channel and serial field. The changed information is stored in the first memory 346 and is further sent to the receiver 2 for updating the information therein.

Fig. 8 shows the block diagram for the receiver 2, which also comprises a second processor 24 as the controller for overall system. A non-volatile second memory 26 is electrically connected to the second processor 24 and stores the information such as assigned communication channel and ID code 5 for the input devices 31-33. The second processor 24 controls a second frequency synthesizer 23 for frequency-jumping reception and demodulation according to the stored information in the non-volatile second memory 26. The input signal 4 received through a receiving antenna 21 and a second RF amplifier 22 can be received in a corresponding signal reception period and then discriminated the ID code therein by the second processor 24. The received signal is then sent to the computer 1 through an I/O interface 25.

Although the present invention has been described with reference to the preferred embodiment thereof, it will be understood that the invention is not limited to the details thereof. Various substitutions and modifications have suggested in the foregoing description, and other will occur to those of ordinary skill in the art.

Therefore, all such substitutions and modifications are intended to be embraced within the scope of the invention as defined in the appended claims.

**Claims**

1. A method for wireless communicating between a computer (1) and a plurality of input devices (31, 32A, 32B; 33A, 33B, 33C), the input devices (31, 32A, 32B; 33A, 33B, 33C) may be assigned to different categories, wherein each of the input devices comprises a transmitter and the computer comprises a receiver (2) for receiving wireless signals from the transmitters, the method comprising the steps of:

   - assigning each input device (31, 32A, 32B; 33A, 33B, 33C) to use a predetermined communication channel according to the category of the input device, wherein input devices of the same category use the same communication channel;
   - repeatedly sending by the input device an input signal (4) having a plurality of periodic cycles within a first time slot ($T_1$);
   - sequentially receiving at the receiver (2) the input signals (4) of multiple input devices (31, 32A, 32B; 33A, 33B, 33C) in a predetermined sequence of the communication channels, wherein each communication channel is received in a receiving cycle corresponding to a second time slot ($T_2$), which is unvarying and shorter than the first time slot ($T_1$), to periodically receive the input signal (4) from each of the input devices in the predetermined sequence of the communication channels used by the input devices.

2. The wireless communication method as in claim 1, wherein the first time slot ($T_1$) and the second time slot ($T_2$) have following relationship:

$$T_2 = T_1/(n-1), \quad n > 2,$$

   where $T_1$ is the duration of the first time slot, $T_2$ is the duration of the second time slot and n is a total number of the input device categories.

3. The wireless communication method as in claim 1, wherein each cycle in the input signal (4) comprises a signal period (41) including a signal and a blank period having no signal, wherein the receiving cycle of the receiver (2) comprises an operation period having a receiving ability and an idle period having no receiving ability.

4. The wireless communication method as in claim 3, wherein each cycle of the input signal (4) is not longer than the operation period of the receiving cycle.

5. The wireless communication method as in claim 1, wherein a product of multiplying the duration of the receiving cycle by a total number of the communication channels is not longer than 59 ms.

6. The wireless communication method as in claim 1, wherein the input signal (4) is prefixed with an ID code (5) for characterizing the input device.

7. The wireless communication method as in claim 6, wherein the ID code (5) comprises a category field (51) for characterizing the category of the input device and a serial field (52) for characterizing the input devices of the same category.

8. The wireless communication method as in claim 7, wherein the category field (51) is not changeable.

9. The wireless communication method as in claim 7, wherein the serial field (52) is changeable.

10. A wireless communication system for communicating between a computer (1) and a plurality of input devices (31, 32A, 32B; 33A, 33B, 33C), comprising:

    at least two input devices, each of the input devices comprises a transmitter for transmitting an input signal, **characterized in that** the input devices are assigned to categories and different communication channels are assigend to each category for transmitting the input signals, wherein input devices (31, 32A, 32B; 33A, 33B, 33C) of the same category using the same communication channel, the input device (31, 32A, 32B; 33A, 33B, 33C) is adapted to send an input signal having a plurality of periodic cycles within a first time slot ($T_1$); wherein a receiver (2) operatively coupled to the computer (1) is adapted to sequentially receive the input signals (4) of multiple input devices in a predetermined sequence of the communication channels, wherein each communication channel is received in a receiving cycle corresponding to a second time slot ($T_2$), which is a unvarying and shorter than the first time slot ($T_1$), to periodically receive the input signal (4) from each of the input devices in the predetermined sequence of the communication channels used by the input devices.

11. The wireless communication system as in claim 10, wherein both the transmitter and the receiver (2) use RF channels as communication channels.

12. The wireless communication system as in claim 10, wherein the first time slot ($T_1$) and the second time slot ($T_2$) have following relationship:

$$T2 = T1/(n-1), \quad n > 2,$$

where T1 is the duration of the first time slot, T2 is the duration of the second time slot and n is a total number of the input device categories.

13. The wireless communication system as in claim 10, wherein each cycle of the input signal (4) comprises a signal period (41) including a signal and a blank period having no signal, wherein the receiving cycle of the receiver (2) comprises an operation period having a receiving ability and an idle period having no receiving ability.

14. The wireless communication system as in claim 13, wherein each cycle of the input signal (4) is not longer than the operation period of the receiving cycle.

15. The wireless communication system as in claim 10, wherein a product of multiplying the receiving cycle of the receiver (2) by a total number of the communication channels is not longer than 59 ms.

16. The wireless communication system as in claim 10, wherein the input signal (4) is prefixed with an ID code (5) for characterizing the input device.

17. The wireless communication system as in claim 16, wherein the ID code 85) comprises a category field (51) for characterizing the category of the input device and a serial field (52) for characterizing the input devices of the same category.

18. The wireless communication system as in claim 17, wherein the category field (51) is not changeable.

19. The wireless communication system as in claim 17, wherein the serial field (52) is changeable.

20. The wireless communication system as in claim 19, further comprising a serial field switch unit (345) to change the serial field (52).

**Patentansprüche**

1. Verfahren zur drahtlosen Kommunikation zwischen einem Computer (1) und mehreren Eingabevorrichtungen (31, 32A, 32B; 33A, 33B, 33C), wobei die Eingabevorrichtungen (31, 32A, 32B; 33A, 33B, 33C) verschiedenen Kategorien zugewiesen sein können, wobei jede der Eingabevorrichtungen einen Sender enthält und der Computer einen Empfänger (2) zum Empfangen drahtloser Signale von den Sendern enthält, wobei das Verfahren die folgenden Schritte umfasst:

- Zuweisen eines vorgegebenen Kommunikationskanals zu jeder Eingabevorrichtung (31, 32A, 32B; 33A, 33B, 33C), den diese verwenden soll, entsprechend der Kategorie der Eingabevorrichtung, wobei Eingabevorrichtungen derselben Kategorie denselben Kommunikationskanal verwenden;
- wiederholtes Senden eines Eingangssignals (4), das mehrere periodische Zyklen besitzt, innerhalb eines ersten Zeitschlitzes ($T_1$) durch die Eingabevorrichtung;
- sequentielles Empfangen der Eingangssignale (4) von mehreren Eingabevorrichtungen (31, 32A, 32B; 33A, 33B, 33C) in einer vorgegebenen Folge der Kommunikationskanäle bei dem Empfänger (2), wobei jeder Kommunikationskanal in einem Empfangszyklus empfangen wird, der einem zweiten Zeitschlitz ($T_2$) entspricht, der unveränderlich ist und kürzer ist als der erste Zeitschlitz ($T_1$), um das Eingangssignal (4) von jeder der Eingabevorrichtungen in der vorgegebenen Folge der Kommunikationskanäle, die von den Eingabevorrichtungen verwendet werden, periodisch zu empfangen.

2. Drahtloses Kommunikationsverfahren nach Anspruch 1, wobei der erste Zeitschlitz ($T_1$) und der zweite Zeitschlitz ($T_2$) in der folgenden Beziehung stehen:

$$T_2 = T_1/(n - 1), \; n > 2,$$

wobei $T_1$ die Dauer des ersten Zeitschlitzes ist, $T_2$ die Dauer des zweiten Zeitschlitzes ist und n eine Gesamtzahl der Kategorien von Eingabevorrichtungen ist.

3. Drahtloses Kommunikationsverfahren nach Anspruch 1, wobei jeder Zyklus in dem Eingangssignal (4) eine Signalperiode (41) mit einem Signal und eine Leerperiode ohne Signal umfasst und der Empfangszyklus des Empfängers (2) eine Betriebsperiode mit Empfangsfähigkeit und eine Leerlaufperiode ohne Empfangsfähigkeit umfasst.

4. Drahtloses Kommunikationsverfahren nach Anspruch 3, wobei jeder Zyklus des Eingangssignals (4) nicht länger als die Betriebsperiode des Empfangszyklus ist.

5. Drahtloses Kommunikationsverfahren nach Anspruch 1, wobei ein Produkt, das durch Multiplikation der Dauer des Empfangszyklus mit einer Gesamtzahl der Kommunikationskanäle erhalten wird, nicht länger als 59 ms ist.

6. Drahtloses Kommunikationsverfahren nach Anspruch 1, wobei das Eingangssignal (4) ein Präfix mit einem ID-Code (5) aufweist, um die Eingabevorrichtung zu kennzeichnen.

7. Drahtloses Kommunikationsverfahren nach Anspruch 6, wobei der ID-Code (5) ein Kategorienfeld (51), um die Kategorie der Eingabevorrichtung zu kennzeichnen, und ein Serienfeld (52), um die Eingabevorrichtungen derselben Kategorie zu kennzeichnen, umfasst.

8. Drahtloses Kommunikationsverfahren nach Anspruch 7, wobei das Kategorienfeld (51) nicht veränderbar ist.

9. Drahtloses Kommunikationsverfahren nach Anspruch 7, wobei das Serienfeld (52) veränderbar ist.

10. Drahtloses Kommunikationssystem für die Kommunikation zwischen einem Computer (1) und mehreren Eingabevorrichtungen (31, 32A, 32B; 33A, 33B, 33C), das umfasst:

wenigstens zwei Eingabevorrichtungen, wovon jede einen Sender zum Senden eines Eingangssignals enthält, **dadurch gekennzeichnet, dass** die Eingabevorrichtungen zu Kategorien zugewiesen sind und jeder Kategorie verschiedene Kommunikationskanäle zugewiesen sind, um die Eingangssignale zu senden, wobei Eingabevorrichtungen (31, 32A, 32B; 33A, 33B, 33C) derselben Kategorie denselben Kommunikationskanal verwenden, die Eingabevorrichtung (31, 32A, 32B; 33A, 33B, 33C) dazu ausgelegt ist, in einem ersten Zeitschlitz ($T_1$) ein Eingangssignal mit mehreren periodischen Zyklen zu senden; wobei ein Empfänger (2), der mit dem Computer (1) funktional gekoppelt ist, dazu ausgelegt ist, die Eingangssignale (4) mehrerer Eingabevorrichtungen in einer vorgegebenen Folge der Kommunikationskanäle sequentiell zu empfangen, wobei jeder Kommunikationskanal in einem Empfangszyklus, der einem zweiten Zeitschlitz ($T_2$) entspricht, der unveränderlich ist und kürzer ist als der erste Zeitschlitz ($T_1$), empfangen wird, um das Eingangssignal (4) von jeder der Eingabevorrichtungen in der vorgegebenen Folge der von den Eingabevorrichtungen verwendeten Kommunikationskanäle periodisch zu empfangen.

11. Drahtloses Kommunikationssystem nach Anspruch 10, wobei sowohl der Sender als auch der Empfänger (2) HF-Kanäle als Kommunikationskanäle verwenden.

**12.** Drahtloses Kommunikationssystem nach Anspruch 10, wobei der erste Zeitschlitz ($T_1$) und der zweite Zeitschlitz ($T_2$) die folgende Beziehung haben:

$$T_2 = T_1/(n - 1), \; n > 2$$

wobei $T_1$ die Dauer des ersten Zeitschlitzes ist, $T_2$ die Dauer des zweiten Zeitschlitzes ist und n eine Gesamtzahl von Kategorien der Eingabevorrichtungen ist.

**13.** Drahtloses Kommunikationssystem nach Anspruch 10, wobei jeder Zyklus des Eingangssignals (4) eine Signalperiode mit einem Signal und eine Leerperiode ohne Signal umfasst und der Empfangszyklus des Empfängers (2) eine Betriebsperiode mit Empfangsfähigkeit und eine Leerlaufperiode ohne Empfangsfähigkeit umfasst.

**14.** Drahtloses Kommunikationssystem nach Anspruch 13, wobei kein Zyklus des Eingangssignals (4) länger als die Betriebsperiode des Empfangszyklus ist.

**15.** Drahtloses Kommunikationssystem nach Anspruch 10, wobei ein Produkt, das durch Multiplizieren des Empfangszyklus des Empfängers (2) mit einer Gesamtzahl der Kommunikationskanäle erhalten wird, nicht länger als 59 ms ist.

**16.** Drahtloses Kommunikationssystem nach Anspruch 10, wobei das Eingangssignal (4) ein Präfix mit einem ID-Code (5) aufweist, um die Eingabevorrichtung zu kennzeichnen.

**17.** Drahtloses Kommunikationssystem nach Anspruch 16, wobei der ID-Code (5) ein Kategorienfeld (51), um die Kategorie der Eingabevorrichtung zu kennzeichnen, und ein Serienfeld (52), um die Eingabevorrichtungen derselben Kategorie zu kennzeichnen, umfasst.

**18.** Drahtloses Kommunikationssystem nach Anspruch 17, wobei das Kategorienfeld (51) nicht veränderbar ist.

**19.** Drahtloses Kommunikationssystem nach Anspruch 17, wobei das Serienfeld (52) veränderbar ist.

**20.** Drahtloses Kommunikationssystem nach Anspruch 19, das ferner eine Serienfeld-Schalteinheit (345) umfasst, um das Serienfeld (52) zu ändern.

## Revendications

**1.** Procédé de communication sans fil entre un ordinateur (1) et une pluralité de dispositifs de saisie (31, 32A, 32B ; 33A, 33B, 33C), les dispositifs de saisie (31, 32A, 32B ; 33A, 33B, 33C) pouvant être assujettis à différentes catégories, dans lequel chacun des dispositifs de saisie comprend un émetteur et l'ordinateur comprend un récepteur (2) pour recevoir des signaux sans fil depuis les émetteurs, le procédé comprenant les étapes consistant à :

- assujettir chaque dispositif de saisie (31, 32A, 32B ; 33A, 33B, 33C) à utiliser un canal de communication prédéterminé selon la catégorie du dispositif de saisie, des dispositifs de saisie de la même catégorie utilisant le même canal de communication ;
- émettre de façon répétée par le dispositif de saisie un signal d'entrée (4) ayant une pluralité de cycles périodiques pendant une première fenêtre temporelle ($T_1$) ;
- recevoir en séquence au niveau du récepteur (2) les signaux d'entrée (4) de multiples dispositifs de saisie (31, 32A, 32B ; 33A, 33B, 33C) dans une séquence prédéterminée des canaux de communication, de sorte que chaque canal de communication est reçu dans un cycle de réception correspondant à une seconde fenêtre temporelle ($T_2$) qui est invariable et plus courte que la première fenêtre temporelle ($T_1$), pour recevoir périodiquement le signal d'entrée (4) provenant de chacun des dispositifs de saisie dans la séquence prédéterminée des canaux de communication utilisés par les dispositifs de saisie.

**2.** Procédé de communication sans fil selon la revendication 1, dans lequel la première fenêtre temporelle ($T_1$) et la seconde fenêtre temporelle ($T_2$) ont la relation suivante :

$$T_2 = T_1/(n - 1), \; \text{avec } n > 2,$$

dans laquelle $T_1$ est la durée de la première fenêtre temporelle, $T_2$ est la durée de la seconde fenêtre temporelle, et n est un nombre total de catégories de dispositifs de saisie.

**3.** Procédé de communication sans fil selon la revendication 1, dans lequel chaque cycle dans le signal d'entrée (4) comprend une période de signal (41) qui inclut un signal et une période occultée qui ne comprend aucun signal, dans lequel le cycle de réception du récepteur (2) comprend une période opérationnelle présentant une capacité de réception et une période avide ne présentant pas de capacité de réception.

4. Procédé de communication sans fil selon la revendication 3, dans lequel chaque cycle du signal d'entrée (4) n'est pas plus long que la période opérationnelle du cycle de réception.

5. Procédé de communication sans fil selon la revendication 1, dans lequel un produit résultant de la multiplication de la durée du cycle de réception par un nombre total de canaux de communication n'est pas plus long que 59 ms.

6. Procédé de communication sans fil selon la revendication 1, dans lequel le signal d'entrée (4) comporte un préfixe avec un code d'identification (5) pour caractériser le dispositif de saisie.

7. Procédé de communication sans fil selon la revendication 6, dans lequel le code d'identification (5) comprend un champ de catégorie (51) pour caractériser la catégorie du dispositif de saisie et un champ de série (52) pour caractériser les dispositifs de saisie de la même catégorie.

8. Procédé de communication sans fil selon la revendication 7, dans lequel le champ de catégorie (51) est inchangeable.

9. Procédé de communication sans fil selon la revendication 7, dans lequel le champ de série (52) est changeabe.

10. Système de communication sans fil pour communiquer entre un ordinateur (1) et une pluralité de dispositifs de saisie (31, 32A, 32B ; 33A, 33B, 33C), comprenant :

au moins deux dispositifs de saisie, chaque dispositif de saisie comprenant un émetteur pour émettre un signal d'entrée,
**caractérisé en ce que** les dispositifs de saisie sont assujettis à des catégories et différents canaux de communication sont assujettis à chaque catégorie pour émettre les signaux d'entrée, des dispositifs de saisie (31, 32A, 32B ; 33A, 33B, 33C) de la même catégorie utilisant le même canal de communication,
le dispositif de saisie (31, 32A, 32B ; 33A, 33B, 33C) est adapté à envoyer un signal d'entrée ayant une pluralité de cycles périodiques à l'intérieur d'une première fenêtre temporelle ($T_1$) ;
dans lequel un récepteur (2) fonctionnellement couplé à l'ordinateur (1) est adapté à recevoir en séquence les signaux d'entrée (4) de multiples dispositifs de saisie dans une séquence prédéterminée des canaux de communication, chaque canal de communication étant reçu dans un cycle de réception correspondant à une seconde fenêtre temporelle ($T_2$) qui est invariable et plus courte que la première fenêtre temporelle ($T_1$), pour recevoir périodiquement le signal d'entrée (4) provenant de chacun des dispositifs de saisie dans la séquence prédéterminée des canaux de communication utilisés par les dispositifs de saisie.

11. Système de communication sans fil selon la revendication 10, dans lequel l'émetteur et le récepteur (2) utilisent tous les deux des canaux RF à titre de canaux de communication.

12. Système de communication sans fil selon la revendication 10, dans lequel la première fenêtre temporelle (T1) et la seconde fenêtre temporelle (T2) ont la relation suivante :

$$T_2 = T_1/(n - 1), \text{ avec } n > 2,$$

dans laquelle $T_1$ est la durée de la première fenêtre temporelle, $T_2$ est la durée de la seconde fenêtre temporelle, et n est un nombre total de catégories de dispositifs de saisie.

13. Système de communication sans fil selon la revendication 10, dans lequel chaque cycle dans le signal d'entrée (4) comprend une période de signal (41) qui inclut un signal et une période occultée qui ne comprend aucun signal, dans lequel le cycle de réception du récepteur (2) comprend une période opérationnelle présentant une capacité de réception et une période avide ne présentant pas de capacité de réception.

14. Système de communication sans fil selon la revendication 13, dans lequel chaque cycle du signal d'entrée (4) n'est pas plus long que la période opérationnelle du cycle de réception.

15. Système de communication sans fil selon la revendication 13, dans lequel un produit résultant de la multiplication de la durée du cycle de réception par un nombre total de canaux de communication n'est pas plus long que 59 ms.

16. Système de communication sans fil selon la revendication 10, dans lequel le signal d'entrée (4) comporte un préfixe avec un code d'identification (5) pour caractériser le dispositif de saisie.

17. Système de communication sans fil selon la revendication 16, dans lequel le code d'identification (5) comprend un champ de catégorie (51) pour caractériser la catégorie du dispositif de saisie et un champ de série (52) pour caractériser les dispositifs de saisie de la même catégorie.

**18.** Système de communication sans fil selon la revendication 17, dans lequel le champ de catégorie (51) est inchangeable.

**19.** Système de communication sans fil selon la revendication 17, dans lequel le champ de série (52) est changeabe.

**20.** Système de communication sans fil selon la revendication 19, comprenant en outre une unité de commutation de champ de série (345) pour changer le champ de série (52).

FIG. 1

FIG. 2

| Channel No. | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Frequency(MHz) | 2477 | 2472 | 2467 | 2462 | 2457 | 2452 | 2447 | 2442 | 2437 | 2432 | 2427 | 2422 | 2417 | 2412 | 2407 | 2402 |

| Channel No. | 17 | 18 | 19 | 20 | 21 | 22 | 23 | 24 | 25 | 26 | 27 | 28 | 29 | 30 | 31 | 32 |
|---|---|---|---|---|---|---|---|---|---|---|---|---|---|---|---|---|
| Frequency(MHz) | 2479 | 2474 | 2469 | 2464 | 2459 | 2454 | 2449 | 2444 | 2439 | 2434 | 2429 | 2424 | 2419 | 2414 | 2409 | 2404 |

FIG. 3

EP 1 729 455 B1

The channel allocation for the
first category of input device:     1 —▶ 4 —▶ 7 —▶ 10 —▶ ·········

The channel allocation for the
second category of input device:    2 —▶ 5 —▶ 8 —▶ 11 —▶ ·········

The channel allocation for the
third category of input device:     3 —▶ 6 —▶ 9 —▶ 12 —▶ ·········

# FIG. 4

ID code 5

| Category field | Serial field | Input signal |
|---|---|---|

51                52                          4

# FIG. 5

Start

S1 — Setting and storing the assigned channel and serial field for the input devices

S2 — Receiver storing the assigned channel and serial field for the input devices

S3 — Receiver receiving the input signal sequentially in cycles of the second time slots

User operating the input device

S4

The input device sending the input signal repeatedly in the first time slot

S5

A

A

S6 — Whether the input signal has a communication channel same as that associated with the signal reception period of the receiver?

No

Yes

S7 — Receiving

S8 — Whether the input signal comes from intra-system input devices

No

Yes

S9 — Processing the input signal

End

FIG. 6

FIG. 7

FIG. 8

**EP 1 729 455 B1**

**REFERENCES CITED IN THE DESCRIPTION**

**Patent documents cited in the description**

- US 5854621 A
- US 5881366 A

- US 4313227 A